# FASCICULE DE BREVET EUROPEEN

(11) **EP 2 383 849 B1**
(45) Date de publication et mention de la délivrance du brevet: **12.12.2018**
(21) Numéro de dépôt: 11290186.3
(22) Date de dépôt: 13.04.2011
(51) Int. Cl.: H02B 1/20

(54) **Dispositif de raccordement électrique vertical**
Vertikale elektrisch leitenden Verbindungsvorrichtung
Vertical electrical connecting device

(30) Priorité: 30.04.2010 FR 1001862
(43) Date de publication de la demande: 02.11.2011
(73) Titulaire: Legrand France, 87000 Limoges (FR); Legrand SNC, 87000 Limoges (FR)
(72) Inventeur: Jardinier, Emmanuel, 87700 Saint Yrieix sous Aixe (FR)
(74) Mandataire: Jacobacci Coralis Harle

(56) Documents cités:
- EP-A1- 1 146 619
- EP-A1- 1 422 799
- DE-A1- 3 813 099
- DE-A1- 4 308 025
- DE-U1-202009 016 077
- FR-A1- 2 438 359

## Description

### DOMAINE TECHNIQUE AUQUEL SE RAPPORTE L'INVENTION

La présente invention concerne un dispositif de raccordement électrique destiné à alimenter des rangées horizontales d'appareillages électriques d'un coffret électrique.

Elle concerne plus particulièrement un tel dispositif de raccordement comprenant une rangée de barres conductrices verticales parallèles, dont deux barres conductrices latérales disposées aux extrémités de cette rangée, comportant chacune au moins un connecteur électrique pour le raccordement électrique desdits appareillages électriques à un réseau électrique.

### ARRIÈRE-PLAN TECHNOLOGIQUE

On connaît déjà, notamment des documents US20070109733, GB2351852 et FR2693848, des dispositifs de raccordement électrique verticaux du type précité, qui comportent une pluralité de connecteurs électriques sur chacune de leurs barres conductrices. Ces connecteurs électriques sont alignés horizontalement de manière à former des rangées de connecteurs comportant un connecteur électrique de chaque barre conductrice.

Chaque connecteur électrique étant typiquement disposé à cheval sur la barre conductrice correspondante, de manière à s'étendre de part et d'autre de cette barre conductrice, la largeur totale du dispositif est alors supérieure à l'écart entre les deux barres conductrices d'extrémité de la rangée de barres conductrices.

Les dispositifs de raccordement connus présentent donc une largeur importante, en particulier pour les dispositifs de raccordement tétrapolaires, et doivent être placés contre le fond du coffret et raccordés aux rangées d'appareillages électriques disposées devant ce dispositif dans le coffret.

Le raccordement des appareillages électriques est alors malaisé pour l'utilisateur et nécessite un temps de mise en place relativement long. La longueur des câbles d'alimentation nécessaire pour raccorder les appareillages est en outre très importante.

On connaît également du document DE3813099, un peigne vertical comportant une rangée de barres conductrices s'étendant perpendiculairement au plan moyen de la rangée. Chaque barre conductrice comporte des connecteurs s'étendant dans le plan de cette barre conductrice ou de l'une des autres barres conductrices. Les possibilités de raccordement du peigne aux rangées d'appareillages sont alors très limitées.

### OBJET DE L'INVENTION

Afin de remédier aux inconvénients précités de l'état de la technique, la présente invention propose un nouveau dispositif de raccordement électrique accessible plus facilement et dont le câblage est ainsi facilité.

Plus particulièrement, l'invention propose un dispositif de raccordement électrique destiné à alimenter des rangées horizontales d'appareillages électriques d'un coffret électrique tel que décrit dans la revendication 1.

La largeur totale du dispositif est ainsi égale à la distance entre les deux barres conductrices latérales.

Elle est ainsi réduite et le dispositif peut être disposé dans le coffret électrique à côté des rangées d'appareillages électriques et non plus derrière celle-ci. Il est ainsi plus facilement accessible.

En outre, ce positionnement libère de la place pour installer des appareillages électriques supplémentaires dans le coffret et faire passer les câbles d'alimentation à l'arrière des appareillages électriques.

Enfin, la disposition des connecteurs électriques dans le dispositif selon l'invention permet d'augmenter facilement le nombre de connecteurs électriques prévus dans le dispositif. Le raccordement des appareillages électriques des rangées en est ainsi encore facilité.

Le sous-ensemble de connexion permet notamment de regrouper dans peu d'espace plusieurs connecteurs électriques, de manière à ce qu'ils soient faciles d'accès pour la connexion des appareillages électriques d'une rangée située à proximité.

D'autres caractéristiques avantageuses et non limitatives du dispositif selon l'invention sont énoncées dans les revendications 2 à 13.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue de la face avant des barres conductrices du dispositif selon l'invention ;
- la figure 2 est une vue de la face arrière des barres conductrices du dispositif selon l'invention ;
- la figure 3 est une vue en perspective des barres conductrices de la figure 1 ;
- la figure 4 est une vue agrandie de la région A de la figure 2 ;
- la figure 5 est une vue en perspective de l'une des extrémités libres d'une des barres conductrices de la figure 1 ;
- la figure 6 est une vue en perspective d'une partie supérieure de l'enveloppe isolante extérieure du dispositif selon l'invention ;
- la figure 7 est une vue en perspective des barres conductrices de la figure 1 partiellement recouvertes par des flasques isolants ;
- la figure 8 est une vue en perspective d'une partie inférieure de l'enveloppe isolante extérieure du dispositif selon l'invention ;
- la figure 9 est une vue en perspective partielle selon la flèche F de la figure 7 ;
- la figure 10 est une vue d'une extrémité libre du dispositif selon l'invention ;
- les figures 11A et 11B montrent l'assemblage de plusieurs éléments modulaires pour former l'enveloppe isolante extérieure de deux variantes du dispositif selon l'invention ;
- les figures 12 et 13 sont des vues en perspective du dispositif selon l'invention monté verticalement à gauche ou à droite des rangées d'appareillages électriques horizontales d'un coffret électrique ;
- la figure 14 est une vue de détail de la figure 12 en l'absence des appareillages électriques ; et
- la figure 15 est une vue de détail du dispositif selon l'invention monté dans un coffret électrique de géométrie différente de celle du coffret des figures 12 à 14.

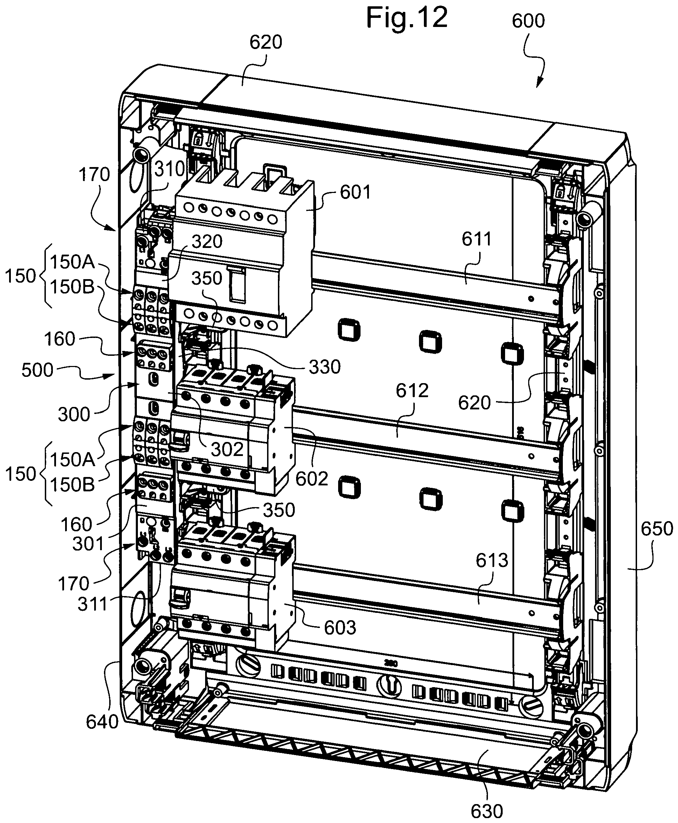

On a représenté sur les figures 12 à 15 un dispositif 500 de raccordement électrique selon l'invention destiné à alimenter des rangées 601, 602, 603 horizontales d'appareillages électriques d'un coffret électrique 600; 800.

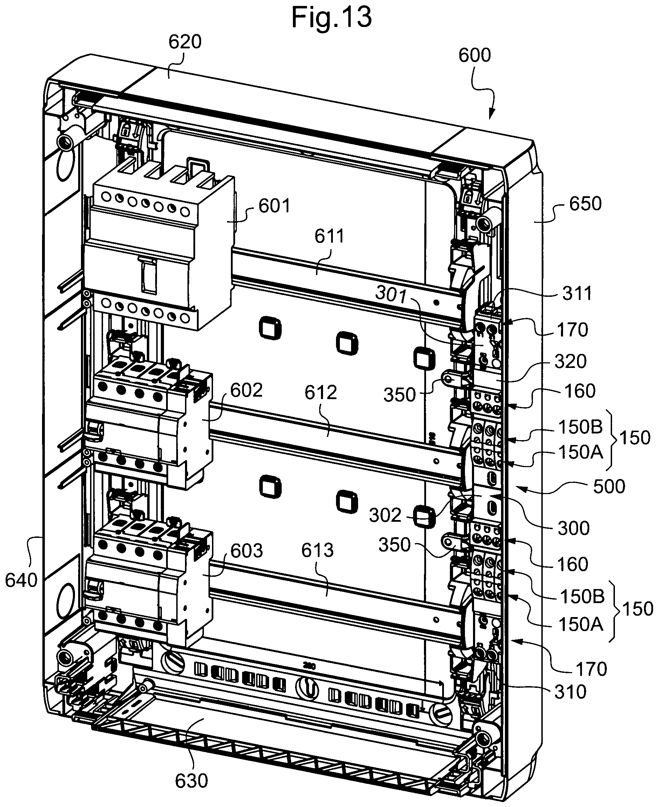

Ces rangées 601, 602, 603 d'appareillages électrique comportent chacune une pluralité d'appareillages électriques. Seuls les appareillages électriques de tête de rangées sont ici représentés sur les figures 12 et 13.

Ces appareillages électriques sont montés sur des rails 611, 612, 613; 811, 812 qui s'étendent horizontalement, parallèlement les uns aux autres dans le coffret 600; 800 correspondant.

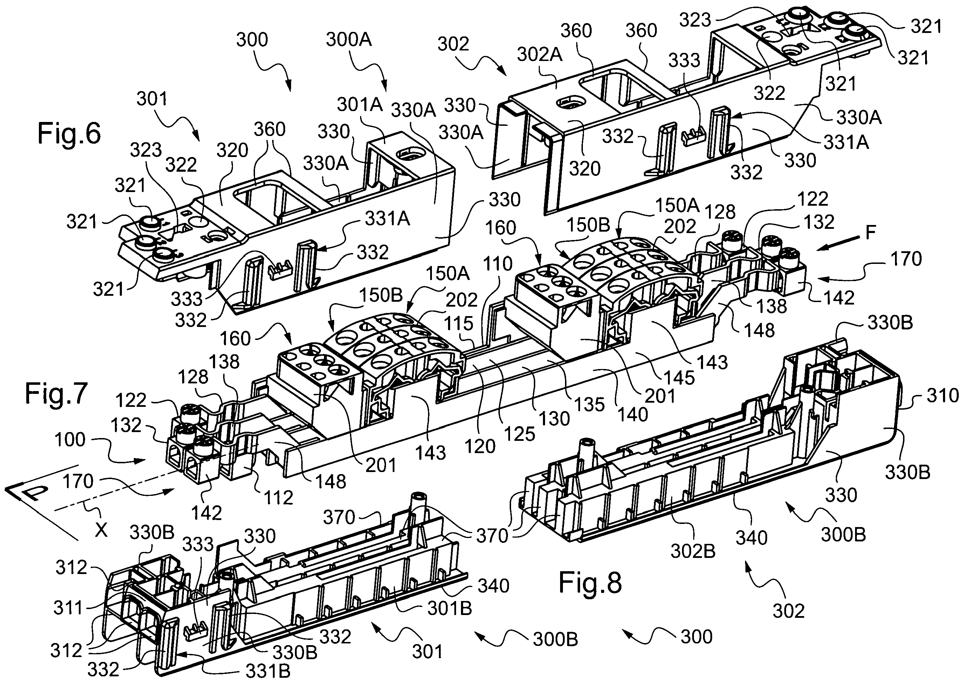

Comme le montrent les figures 6, 7 et 8 qui forment ensemble un éclaté du dispositif 500 de raccordement électrique, celui-ci comporte une rangée 100 de barres conductrices 110, 120, 130, 140 parallèles destinées à être disposée verticalement dans le coffret électrique 600; 800 correspondant, logée dans une enveloppe isolante extérieure 300.

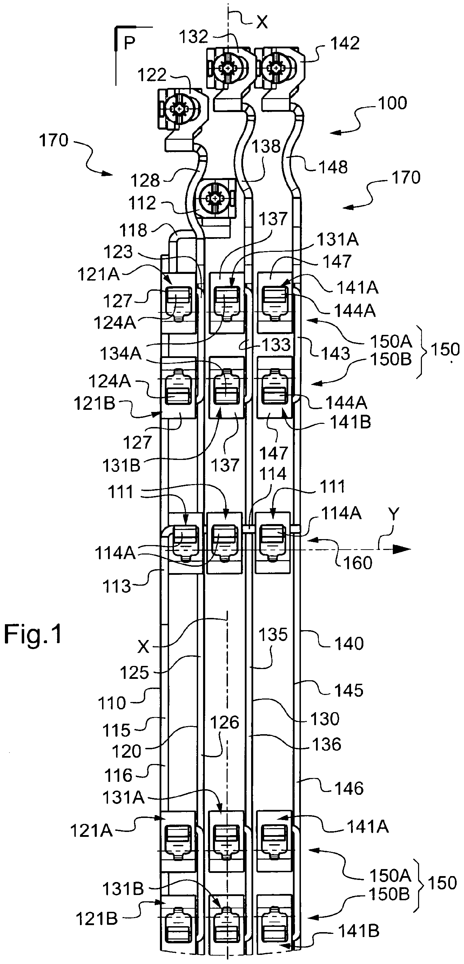

Chaque barre conductrice 110, 120, 130, 140 s'étend parallèlement à un axe longitudinal X du dispositif 500 de raccordement. La rangée 100 de barres conductrices 110, 120, 130, 140 présente un plan moyen P parallèle à cet axe longitudinal X (figures 1, 2, 3 et 7).

Le corps de chaque barre conductrice 110, 120, 130, 140 est ici formé d'une plaquette 115, 125, 135, 145 métallique mince et allongée selon l'axe longitudinal X, présentant deux faces principales opposées reliées par une tranche 116, 126, 136, 146 de cette plaquette 115, 125, 135, 145.

Les plaquettes 115, 125, 135, 145 présentent ici avantageusement les mêmes dimensions pour toutes les barres conductrices 110, 120, 130, 140.

Les barres conductrices 110, 120, 130, 140 sont de plus disposées de manière que les faces principales opposées des plaquettes 115, 125, 135, 145 soient disposées parallèlement les unes aux autres, perpendiculairement au plan moyen P de la rangée 100.

C'est donc la tranche 116, 126, 136, 146 des barres conductrices 110, 120, 130, 140 qui est orientée vers l'avant du dispositif 500 de raccordement accessible à l'utilisateur.

L'encombrement des barres conductrices 110, 120, 130, 140 est ainsi réduit.

En variante, une ou plusieurs barres conductrices peuvent être décalées par rapport au plan moyen P des autres barres conductrices ou présenter une largeur ou une épaisseur différente des autres barres conductrices.

Dans l'exemple représenté sur les figures, le dispositif 500 de raccordement électrique est tétrapolaire. La rangée 100 comporte donc quatre barres conductrices 110, 120, 130, 140.

On pourrait néanmoins envisager un dispositif de raccordement électrique selon l'invention comportant deux ou trois barres conductrices, ou plus de quatre barres conductrices.

Cette rangée 100 de barres conductrices 110, 120, 130, 140 comporte deux barres conductrices 110, 140 latérales disposées aux extrémités de cette rangée 100 et appelées dans la suite « barres conductrices latérales 110, 140 ».

De manière classique, chacune des barres conductrices 110, 120, 130, 140 comporte au moins un connecteur électrique 111, 112, 121A, 121B, 122, 131A, 131B, 132, 141A, 141B, 142 pour le raccordement électrique desdits appareillages électriques à un réseau électrique.

Ici, chaque barre conductrice 110, 120, 130, 140 comporte avantageusement une pluralité de connecteurs électriques 111, 112, 121A, 121B, 122, 131A, 131B, 132, 141A, 141B, 142.

Plus particulièrement, chaque barre conductrice 110, 120 ,130, 140 comporte au moins un connecteur électrique 111, 121A, 121B, 131A, 131B, 141A, 141B pour le raccordement de cette barre conductrice avec l'une des rangées d'appareillages électriques 601, 602, 603 du coffret 600; 800 dans lequel le dispositif 500 de raccordement est monté.

Chacun de ces connecteurs électriques 111, 121A, 121B, 131A, 131B, 141A, 141B est disposé entre les deux extrémités libres de chaque barre conductrice 110, 120, 130, 140 et sera désigné par la suite par l'expression « connecteur électrique intermédiaire ».

Chaque barre conductrice 110, 120, 130, 140 comporte de préférence une pluralité de connecteurs électriques intermédiaires 111, 121A, 121B, 131A, 131B, 141A, 141B.

Tous les connecteurs électriques intermédiaires 111, 121A, 121B, 131A, 131B, 141A, 141B sont disposés en avant des barres conductrices correspondantes 110, 120, 130, 140. Autrement dit, les plaquettes 115, 125, 135, 145 des barres conductrices 110, 120, 130, 140 sont situées derrière ces connecteurs électriques intermédiaires dans le dispositif 500.

Chacune des barres conductrices 110, 120, 130, 140 comporte également au moins un connecteur électrique 112, 122, 132, 142 pour son raccordement au réseau électrique.

Chacun de ces connecteurs électriques 112, 122, 132, 142 est situé à l'une des extrémités de chaque barre conductrices 110, 120, 130, 140 et sera appelé dans la suite « connecteur électrique d'extrémité ».

Chaque barre conductrice 110, 120, 130, 140 de la rangée 100 comporte de préférence deux connecteurs électriques d'extrémité 112, 122, 132, 142 situés chacun à l'une de ses extrémités libres.

Ainsi, le dispositif 500 de raccordement peut être raccordé à ses deux extrémités libres aux câbles d'alimentation du réseau électrique (non représenté sur les figures).

Ces câbles d'alimentation pénètrent généralement dans le coffret électrique 600; 800 correspondant par une ou plusieurs ouvertures d'accès ménagées dans une paroi latérale supérieure 620 ou inférieure 630 du coffret 600; 800 (voir les figures 12 et 13).

Il est donc avantageux de pouvoir raccorder les câbles d'alimentation du réseau électrique à celle des extrémités libres du dispositif 500 qui est orientée vers la paroi latérale supérieure 620 ou inférieure 630 du coffret 600; 800 qui présente ladite ouverture d'accès.

Tous les connecteurs électriques 111, 112, 121A, 121B, 122, 131A, 131B, 132, 141A, 141B, 142 des barres conductrices 110, 120, 130, 140 de ladite rangée 100 sont disposés dans un espace compris entre lesdites deux barres conductrices latérales 110, 140.

La largeur du dispositif de raccordement 500 mesurée selon une direction transversale Y perpendiculaire à l'axe longitudinal X (figures 1, 2, 3 et 7) dans le plan moyen P des barres conductrices 110, 120, 130, 140 est ainsi minimale. Elle est en effet alors égale à l'écart entre les barres conductrices latérales 110, 140.

Ceci est rendu possible par le fait que chaque connecteur électrique intermédiaire et d'extrémité 111, 112 d'au moins une 110 des barres conductrices 110, 120, 130, 140 est décalé suivant l'axe longitudinal X de ladite barre conductrice 110 par rapport aux connecteurs électriques intermédiaires et d'extrémité 121A, 121B, 122, 131A, 131B, 132, 141A, 141B, 142 de toutes les autres barres conductrices 120, 130, 140 (figures 1, 2 et 3).

Comme le montrent les figures 1, 2 et 3, il s'agit ici des connecteurs électriques intermédiaires et d'extrémité 111, 112 de l'une 110 des barres conductrices latérales 110, 140.

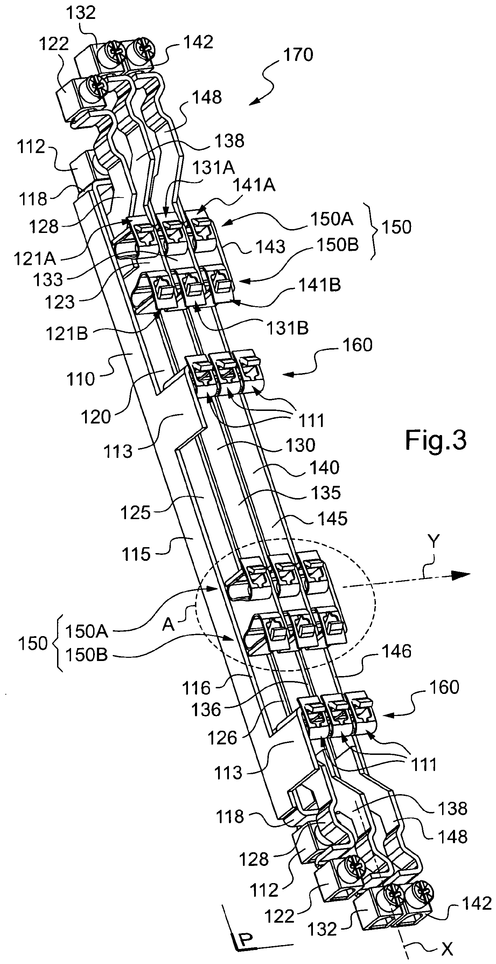

Les connecteurs électriques intermédiaires et d'extrémité 111, 112 de cette barre conductrice latérale 110 dont les conducteurs sont décalés ne se trouvent donc jamais alignés selon la direction transversale Y avec un ou plusieurs connecteurs électriques intermédiaires ou d'extrémité des autres barres conductrices 120, 130, 140 (figures 1 et 3).

Cette barre conductrice latérale 110 dont les connecteurs électriques intermédiaires et d'extrémité 111, 112 sont décalés correspond ici à la barre conductrice conduisant le courant de neutre. Elle sera désignée par la suite par l'expression « barre conductrice latérale de neutre 110 ».

Les trois autres barres conductrices 120, 130, 140 correspondent ici aux barres conductrices conduisant le courant de phase. Elles seront désignées par la suite par l'expression « barres conductrices de phase 120, 130, 140 ».

En variante, la barre conductrice dont les conducteurs électriques sont décalés longitudinalement peut être l'une des barres conductrices de phase.

De manière remarquable, le dispositif 500 de raccordement selon l'invention comporte des sous-ensembles de connexion 150A, 150B, 160 qui regroupent des connecteurs électriques intermédiaires 111, 121A, 131A, 141A, 121B, 131B, 141B des barres conductrices 110, 120, 130, 140 alignés les uns à côtés des autres suivant la direction transversale Y auxdites barres conductrices.

Il est prévu de préférence au moins un sous-ensemble de connexion 150A, 150B de phase qui comprend un connecteur électrique intermédiaire 121A, 131A, 141A, 121B, 131B, 141B de chaque barre conductrice de phase 120, 130, 140 mais aucun connecteur électrique intermédiaire 111 de ladite barre conductrice latérale de neutre 110.

Dans l'exemple représenté sur les figures 1, 2, 3 et 7, il est plus particulièrement prévu quatre sous-ensembles de connexion 150A, 150B de phase.

Ces sous-ensembles de connexion 150A, 150B de phase sont de préférence groupés par paire 150 le long de l'axe longitudinal X des barres conductrices 120, 130, 140.

Comme le montrent les figures 1, 3, 4 et 5, les deux connecteurs électriques intermédiaires 121A, 121B, 131A, 131B, 141A, 141B issus de chaque barres conductrices de phase 120, 130, 140 et appartenant à une même paire 150 de sous-ensembles de connexion 150A, 150B de phase sont rattachés à la barre conductrice de phase 120, 130, 140 correspondante par l'intermédiaire d'une unique patte 123, 133, 143.

Cette patte 123, 133, 143 est ici formée d'une seule pièce avec la plaquette 125, 135, 145 formant le corps de la barre conductrice 120, 130, 140 correspondante, dans le prolongement de cette plaquette 125, 135, 145, et s'étend vers l'avant du dispositif 500, à partir de la tranche 126, 136, 146 de la plaquette 125, 135, 145 de la barre conductrice 120, 130, 140 correspondante.

Cette patte 123, 133, 143 comporte deux ailes latérales 124, 134, 144 qui s'étendent à angle droit par rapport à la plaquette 125, 135, 145 formant le corps de la barre conductrice 120, 130, 140 correspondante, au dessus de la tranche 126, 136, 146 de cette plaquette (figures 3, 4 et 5).

Ces deux ailes latérales 124, 134, 144 sont formées par découpe de deux encoches à la base de ladite patte 123, 133, 143, le long de la tranche 126, 136, 146 de la plaquette 125, 135, 145 et pliage des bords ainsi découpés de cette patte 123, 133, 143 (figures 3, 4 et 5).

Ici, les ailes latérales 124, 134, 144 de chaque patte 123, 133, 143 de chaque barre conductrice 120, 130, 140 s'étendent dans l'espace compris entre la plaquette formant le corps de la barre conductrice à laquelle elles sont rattachées et la plaquette de la barre conductrice voisine, vers l'intérieur du dispositif 500 de raccordement (figures 1, 2, 3 et 4).

La patte 123, 133, 143 et ses deux ailes latérales 124, 134, 144 présentent donc un profil en U à l'intérieur duquel sont disposées deux lames ressort 127, 137, 147 formant deux bornes de connexion automatique à ressort classiques dans lesquelles l'une des deux ailes latérales 124, 134, 144 joue le rôle de lame conductrice.

Chaque aile latérale 124, 134, 144 comporte une extrémité libre 124A, 134A, 144A avant inclinée vers l'extrémité libre 124A, 134A, 144A avant de l'autre aile latérale.

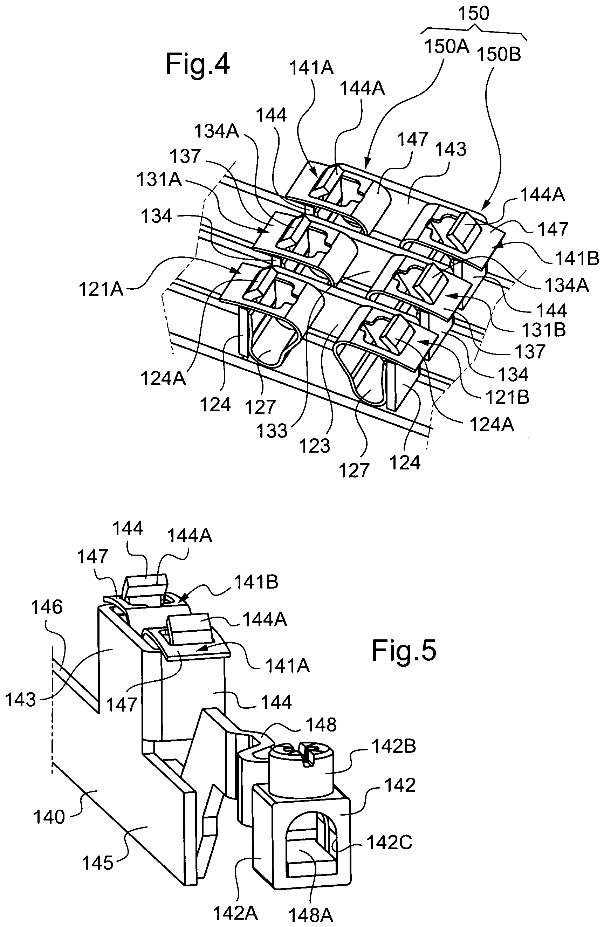

Chaque lame ressort 127, 137, 147 forme une boucle dont une branche est pourvue d'une ouverture au travers de laquelle émerge cette extrémité libre 124A, 134A, 144A de l'aile latérale 124, 134, 144 correspondante (voir figures 3 et 4).

L'autre branche de la lame ressort 127, 137, 147 prend appui contre une face interne de l'aile latérale 124, 134, 144 correspondante. Cette branche est bloquée contre cette face interne par l'extrémité libre 124A, 134A, 144A inclinée de l'aile latérale correspondante.

L'inclinaison de l'extrémité libre 124A, 134A, 144A permet également de faciliter l'introduction du conducteur dans le connecteur électrique intermédiaire 121A, 121B, 131A, 131B, 141A, 141B correspondant.

Cette disposition de deux lames ressort 127, 137, 147 dans un profil en U permet de former deux connecteurs électriques intermédiaires 121A, 121B, 131A, 131B, 141A, 141B dans un espace réduit.

Le nombre de connecteurs électriques intermédiaires de phase le long du dispositif 500 peut avantageusement être augmenté.

Les pattes 123, 133, 143 issues des trois barres conductrices de phase 120, 130, 140 et supportant les connecteurs électriques intermédiaire d'une paire 150 de sous-ensembles de connexion 150A, 150B sont disposées parallèlement les unes aux autres et alignées selon la direction de l'axe transversal Y, de telle sorte que les connecteurs électriques de chaque sous-ensembles de connexion 150A, 150B correspondant soit également alignés selon cette direction.

Il est également prévu des sous-ensembles de connexion 160 de neutre comprenant uniquement des connecteurs électriques intermédiaires 111 de ladite barre conductrice latérale de neutre 110 dont les connecteurs électriques intermédiaires et d'extrémité 111, 112 sont décalés longitudinalement par rapport aux connecteurs électriques intermédiaires et d'extrémité 121A, 121B, 122, 131A, 131B, 132, 141A, 141B, 142 des autres barres conductrices 120, 130, 140.

Chaque sous-ensemble de connexion 160 comprend plus particulièrement ici trois connecteurs électriques intermédiaires 111 rattachés à la barre conductrice de neutre 110.

Comme le montrent les figures 1, 2 et 3, les trois connecteurs électriques intermédiaires 111 issus de cette barre conductrice de neutre 110 sont rattachés à celle-ci par l'intermédiaire d'une patte 113, de manière similaire aux connecteurs électriques intermédiaires de phase.

Cette patte 113 est ici formée d'une seule pièce avec la barre conductrice de neutre 110 et s'étend vers l'avant, à partir de la tranche 116 de la barre conductrice de neutre 110.

Cette patte 113 comporte ici une seule aile 114 latérale formée par découpe d'une encoche à la base de ladite patte 113, le long de la tranche 116 de la plaquette 115 formant le corps de la barre conductrice de neutre 110 et pliage d'une partie de cette patte 113 selon un plan perpendiculaire à l'axe longitudinal X des barres conductrices 110, 120, 130, 140 de la rangée 100.

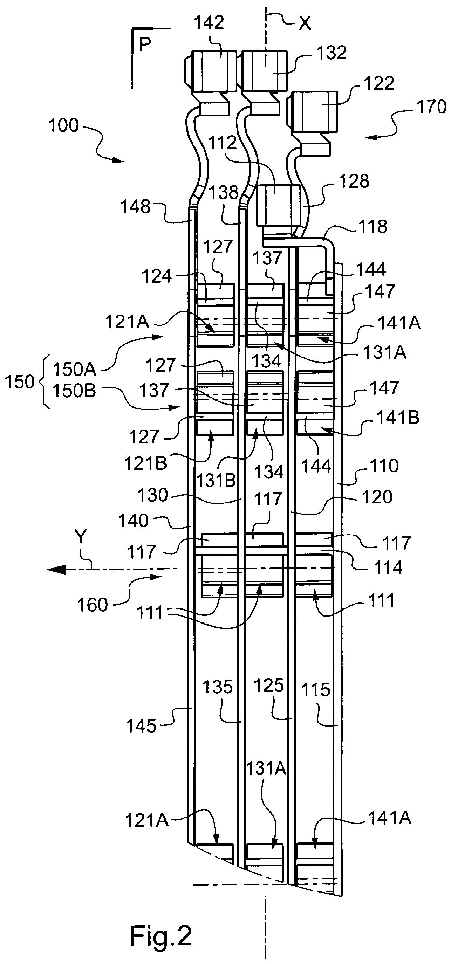

Cette aile 114 latérale s'étend au dessus des tranches 116, 126, 136, 146 des plaquettes 115, 125, 135, 145 des barres conductrices 110, 120, 130, 140, dans l'espace compris entre la barre conductrice latérale de neutre 110 et l'autre barre conductrice latérale 140 (figures 2 et 3).

A partir du bord avant de cette aile 114 de la patte 113 s'étendent trois languettes inclinées 114A qui jouent le rôle des extrémités libres inclinées 124A, 134A, 144A des ailes latérales 124, 134, 144 des pattes 123, 133, 143 portant les lames ressort 127, 137, 147 des autres connecteurs électriques intermédiaires 121A, 121B, 131A, 131B, 141A, 141B.

Une lame ressort 117 en forme de boucle est accrochée à chacune de ces trois languettes inclinées 114A. Chaque languette inclinée 114A traverse l'ouverture de l'une des branches de la lame ressort 117 correspondante tandis que l'autre branche de cette lame ressort 117 est plaquée contre une face de l'aile 114 orientée du côté de la patte 113 correspondante, et bloquée par la languette inclinée 114A correspondante.

L'inclinaison des languettes 114A permet également de faciliter l'introduction du conducteur dans le connecteur électrique intermédiaire 111 correspondant.

Les trois lames ressort 127, 137, 147 connectées à l'aile 114 de chaque patte 113 de la barre conductrice de neutre 110 sont disposées parallèlement les unes aux autres et alignées selon la direction de l'axe transversal Y.

Finalement, les trois connecteurs électriques intermédiaires 111 qui forment chaque sous-ensemble de connexion 160 de neutre sont donc disposés en rangée, sensiblement parallèlement aux connecteurs électriques intermédiaires 121A, 121B, 131A, 131B, 141A, 141B des barres conductrices de phase 120, 130, 140 qui forment les sous-ensembles 150A, 150B de phase.

En outre, chaque connecteur électrique intermédiaire 111 de la barre conductrice de neutre 110 est sensiblement aligné avec les connecteurs électriques intermédiaires 121A, 121B, 131A, 131AB, 141A, 141B issus de l'une des barres conductrices de phase 120, 130, 140 (figure 1).

De préférence, les connecteurs électriques intermédiaires 111, 121A, 121B, 131A, 131B, 141A, 141B de toutes les barres conductrices 110, 120, 130, 140 sont situés à une même distance de la barre conductrice à laquelle ils sont rattachés, de manière à ce que les ouvertures des bornes automatiques à ressort correspondantes soient toutes situées sensiblement dans un même plan.

En variante, si les largeurs des plaquettes formant les barres conductrices varient ou si certaines barres conductrices sont décalées par rapport au plan moyen des autres barres conductrices, les connecteurs électriques intermédiaires sont situés à différentes distances de la barre conductrice correspondante, de manière à ce que les ouvertures des bornes automatiques de ces connecteurs électriques restent disposées dans un même plan.

Il est prévu avantageusement une pluralité de paires 150 de sous-ensembles de connexion de phase 150A, 150B et de sous-ensembles de connexion de neutre 160 répartis longitudinalement sur la longueur des barres conductrices 110, 120, 130 ,140.

Plus particulièrement, il est prévu de haut en bas du dispositif 500 une alternance de paires 150 de sous-ensembles de connexion de phase 150A, 150B et de sous-ensembles de connexion de neutre 160 (figure 3).

Un sous-ensemble de connexion de neutre 160 est placé à proximité de chaque paire 150 de sous-ensembles de connexion de phase 150A, 150B et l'ensemble est disposé de manière à se trouver à proximité d'une rangée d'appareillages électriques dans le coffret : ces ensembles sont espacés sur le dispositif 500 d'un écart sensiblement égal à l'écart entre deux rangées d'appareillages électrique dans le coffret électrique 600; 800.

Ainsi, il est prévu une paire 150 de sous-ensembles de connexion de phase 150A, 150B et un sous-ensemble de connexion de neutre 160 pour chaque rangée d'appareillages électriques du coffret alimentée par le dispositif 500.

Les connecteurs électriques d'extrémités 112, 122, 132, 142 de chaque barre conductrice 110, 120, 130, 140 forment également un sous-ensemble de connexion 170 à chaque extrémité libre de la rangée 100 de barres conductrices 110, 120, 130, 140.

Ils comportent chacun une borne à vis (figures 1, 3 et 5)

Ces connecteurs électriques d'extrémité 112, 122, 132, 142 sont rattachés chacun à la plaquette 115, 125, 135, 145 formant le corps de la barre conductrice 110, 120, 130, 140 correspondante par un bras 118, 128, 138, 148 conducteur en métal clinché à l'extrémité de ladite plaquette.

Le clinchage de ce bras 118, 128, 138, 148 conducteur présente l'avantage de limiter les coûts de production en évitant la formation de rebuts comme ce serait le cas si le bras et la plaquette correspondante étaient découpés d'une seule pièce.

Les connecteurs électriques d'extrémité 112, 122, 132, 142 de toutes les barres conductrices 110, 120, 131, 140 sont semblables au connecteur d'extrémité 142 de la barre conductrice de phase 140 représenté plus particulièrement sur la figure 5. Seul ce connecteur d'extrémité 142 particulier sera ainsi décrit plus en détail en référence à cette figure 5.

Chaque connecteur d'extrémité 142 comporte de manière classique une cage 142A fixée à l'extrémité du bras 148 le reliant à la barre conductrice 140.

Cette cage 142A présente une ouverture 142C ouverte selon l'axe longitudinal X de la barre conductrice 140, de telle sorte que l'insertion des câbles d'alimentation pour le raccord électrique du dispositif 500 de raccordement au réseau électrique se fasse selon l'axe longitudinal X du dispositif 500.

La cage 142A accueille en face avant une vis 142B adaptée à bloquer, lorsqu'elle est vissée dans la cage 142A, l'extrémité dénudée du câble d'alimentation insérée dans l'ouverture 142C contre une extrémité libre 148A du bras 148 logée dans cette cage 142A.

La vis 142B est donc accessible à l'utilisateur en face avant du dispositif 500 de raccordement.

Les bras 128, 138, 148 reliant les connecteurs électriques d'extrémité 122, 132, 142 des barres conductrices de phase 120, 130, 140 à celles-ci sont ici coudées, de telle sorte que les connecteurs électriques d'extrémité 122, 132, 142 de ces barres conductrices de phase 120, 130, 140 sont disposés en avant par rapport aux barres conductrices de phase 120, 130, 140.

Les connecteurs électriques d'extrémité 112 de la barre conductrice de neutre 110 sont, comme tous les connecteurs électriques de la barre de neutre 110, décalés longitudinalement par rapport aux connecteurs électriques d'extrémité 122, 132, 142 des barres conductrices de phase 120, 130, 140.

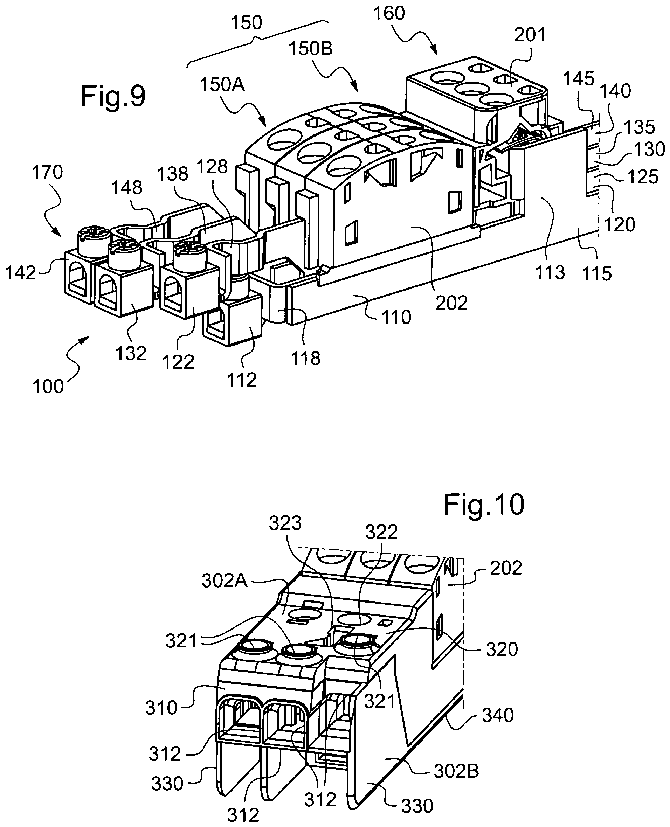

En outre, ils sont disposés en retrait par rapport aux connecteurs électriques d'extrémité 122, 132, 142 des barres conductrices de phase 120, 130, 140 comme cela est particulièrement bien visible sur la figure 9.

Ici, le bras 118 reliant les connecteurs électriques d'extrémité 112 de la barre conductrice de neutre 110 à celle-ci s'étend dans selon le plan moyen P de la rangée 100 de barres conductrices 110, 120, 130, 140.

En variante, ce bras peut s'étendre légèrement en avant ou en arrière du plan moyen P de la rangée.

Ce bras 118 est ici replié à angle droit en direction des barres conductrices de phase 120, 130, 140, vers l'intérieur du dispositif 500 de raccordement, de manière à amener le connecteur électrique d'extrémité 112 de la barre conductrice de neutre 110 sous les bras 128, 138 reliant les connecteurs électriques d'extrémité 122, 132 aux barres conductrices de phase voisines (voir la figure 9).

Plus précisément, chaque connecteur électrique d'extrémité 112 de la barre conductrice de neutre 110 est amené en regard de l'espace libre laissé entre les deux bras 128, 138 reliant les connecteurs électriques d'extrémité 122, 132 voisins aux plaquettes 125, 135 formant le corps des barres conductrices de phase 120, 130 correspondantes.

La vis de la cage du connecteur électrique d'extrémité 112 de la barre conductrice de neutre 110 est ainsi accessible à l'utilisateur entre les bras 128, 138 reliant les connecteurs électriques d'extrémité 122, 132 voisins aux barres conductrices de phase 120, 130 correspondantes.

Ici les connecteurs électriques d'extrémité 122, 132, 142 des barres conductrices de phase 120, 130, 140 ne sont pas tous alignés selon une direction perpendiculaire à l'axe longitudinal X des barres conductrices correspondantes.

On peut évidemment prévoir en variante qu'ils soient tous alignés ou au contraire tous désalignés.

Comme le montrent les figures 6, 7, 8 et 12 à 15, une partie de la rangée 100 de barres conductrices 110, 120, 130, 140 est entourée par des flasques isolants 201, 202 et le reste de cette rangée 100 est recouverte par l'enveloppe isolante extérieure 300, de manière à ce que la rangée 100 de barres conductrices 110, 120 ,130, 140 soit entièrement isolée électriquement et puisse être manipulée par l'utilisateur de manière parfaitement sécurisée.

Plus particulièrement, les flasques isolants 201, 202 sont des capots qui recouvrent les connecteurs électriques intermédiaires 111, 121A, 121B, 131A, 131B, 141A, 141B de l'ensemble de barres conductrices 110, 120, 130 ,140.

Ces flasques isolants 201, 202 sont réalisées par exemple par moulage d'une matière thermoplastique.

Chaque flasque isolant 201, 202 présente une forme standardisée adaptée à recouvrir soit un sous-ensemble de connexion de neutre 160, soit une paire 150 de sous-ensembles de connexion de phase 150A, 150B.

Il est prévu ici par exemple un flasque isolant 201 présentant une forme adaptée à son montage autour de chaque sous-ensemble de connexion de neutre 160 et un flasque isolant 202 présentant une forme adaptée à son montage autour de chaque paire 150 de sous-ensembles de connexion de phase 150A, 150B (figure 7).

Ces flasques isolants 201, 202 comportent en face avant des ouvertures adaptées au passage de câble de raccordement et situées en vis-à-vis des ouvertures des lames ressort 117, 127, 137, 147 des connecteurs électriques intermédiaires 111, 121A, 121B, 131A, 131B, 141A, 141B du dispositif 500.

Ces câbles de raccordement permettent ainsi de connecter électriquement les appareillages électriques de tête de chaque rangée d'appareillages électrique 601, 602, 603 au dispositif 500 de raccordement.

Le montage de ces flasques isolants 201, 202 sur les sous-ensembles de connexion se fait par exemple par emboitement ou par encliquetage. Les flasques isolants 201, 202 peuvent également être simplement posés sur les rangées lors de l'assemblage du dispositif 500 et maintenus en place par l'enveloppe isolante extérieure 300.

Ce montage des flasques isolants est dans tous les cas rapide et aisé.

En outre, la présence de ces flasques isolants réduit la distance minimale de sécurité imposée entre les connecteurs électriques et permet de rapprocher ceux-ci, par exemple pour former les paires de sous-ensembles de connexion de phase, ou pour augmenter le nombre de connecteurs électriques de chaque barre conductrice.

Les barres conductrices sont par ailleurs enfermées dans l'enveloppe isolante extérieure 300.

Celle-ci comporte des fenêtres 360 (figure 6) à travers lesquelles émergent les flasques isolants 201, 202 qui recouvrent les sous-ensembles de connexion 150A, 150B, 160.

Cette enveloppe isolante extérieure 300 est constituée ici de deux parties avant 300A et arrière 300B, représentées respectivement sur les figures 6 et 8, comprenant des moyens d'assemblage l'une avec l'autre.

Il s'agit ici par exemple de moyens de vissage, de moyens d'emboitement ou d'encliquetage.

Ces parties avant 300A et arrière 300B sont par exemple réalisées par moulage d'un matériau thermoplastique.

La partie avant 300A de l'enveloppe isolante extérieure 300 forme la paroi avant 320 du dispositif 500 et la partie centrale 330A des parois latérales longitudinales 330 du dispositif 500 de raccordement (figure 6).

La paroi avant 320 du dispositif 500 comporte à chacune de ses extrémités libres des ouvertures d'accès 321, 322 donnant accès aux vis 142C des bornes à vis des connecteurs électriques d'extrémité 112, 122, 132, 142 (figures 6 et 10).

Le connecteur électrique d'extrémité 112 de la barre conductrice de neutre 110 étant situé en retrait des autres connecteurs électriques d'extrémité 122, 132, 142 et étant décalé longitudinalement par rapport aux autres connecteurs d'extrémité 122, 132, 142, l'introduction du câble d'alimentation correspondant dans ce connecteur est moins aisée que pour les autres connecteurs d'extrémité.

Pour faciliter cette introduction, il est prévu en plus de l'ouverture d'accès 322 donnant accès à la vis de ce connecteur d'extrémité 112, un orifice 323 (figures 6, 10 et 14) permettant à l'utilisateur de visualiser la partie dénudée du câble d'alimentation lorsque celle-ci approche de l'ouverture de la cage de ce connecteur électrique d'extrémité 112.

La partie arrière 300B de l'enveloppe isolante extérieure 300 forme les parois supérieure 310 et inférieure 311 du dispositif 500, situées aux extrémités libres du dispositif 500, la paroi arrière 340 et les parties extrêmes 330B des parois latérales 330 du dispositif 500 de raccordement (figure 8).

La paroi supérieure 310 du dispositif 500 sera ici la paroi de l'extrémité libre du dispositif 500 disposée vers le haut du coffret 600; 800 lorsque le dispositif 500 est placée à gauche des rails 611, 612, 613 de montage des appareillages électriques dans le coffret (figure 12).

Les parois supérieure 310 et inférieure 311 comportent des orifices 312 (figures 8 et 10) disposés en regard des ouvertures 142C des cages 142A des connecteurs électriques d'extrémité 112, 122, 132, 142 et qui autorisent l'insertion des câbles d'alimentation du dispositif 500 dans ces connecteurs électriques d'extrémité 112, 122, 132, 142 des barres conductrices 110, 120, 130, 140.

En outre, la partie arrière 300B de l'enveloppe isolante extérieure 300 forme trois cloisons 370 isolantes venant s'interposer entre les quatre barres conductrices 110, 120, 130, 140 pour la sécurité électrique du dispositif 500 (figure 8).

Ces cloisons 370 s'élèvent perpendiculairement à la partie arrière 340 de la partie arrière 300B de l'enveloppe isolante extérieure 300. La hauteur de ces cloisons 370 est inférieure à la largeur des plaquettes 115, 125, 135, 145 formant le corps des barres conductrices 110, 120, 130, 140, c'est-à-dire à la distance entre les parties avant et arrière de la tranche 116, 126, 136, 146 de cette plaquette.

Par ailleurs, les parties centrale et extrêmes 330A, 330B de l'une des deux parois latérales longitudinales 330 de ladite enveloppe isolante extérieure 300 porte sur sa face externe des moyens de réception 331A, 331B à glissière d'éléments de fixation 350 (représentés sur les figures 6, 14 et 15) du dispositif 500 de raccordement dans le coffret 600; 800 correspondant.

Ces moyens de réception 331A, 331B du dispositif 500 dans le fond du coffret 600; 800 sont disposés asymétriquement seulement sur la face externe de l'une des deux parois latérales longitudinales 330 de la partie avant 300A de cette enveloppe 300, à savoir la paroi latérale longitudinale destinée à être tournée vers les rails 611, 612, 613; 811, 812 de montage des appareillages électriques 601, 602, 603 du coffret 600, 800.

La paroi latérale longitudinale 330 du dispositif 500 ne comportant pas de moyens de réception 331A, 331B peut alors être plaquée contre la paroi latérale longitudinale 640, 650 (figures 12 et 13) adjacente du coffret 600; 800 dans lequel le dispositif 500 est monté.

Cela ne serait pas le cas si les faces externes des deux parois latérales longitudinales 330 du dispositif 500 comportaient des moyens de réception 311A, 311B car ces moyens de réception présentent une certaine épaisseur.

L'encombrement en largeur du dispositif 500 est ainsi limité pour faciliter son montage à côté des rangées d'appareillages électriques.

Il est alors nécessaire de retourner à 180 degrés le dispositif 500 pour le faire passer du côté gauche des rangées d'appareillages électriques 601, 602, 603 (figure 12) au côté droit (figure 13).

Il est d'autant plus facile d'opérer ce retournement que le dispositif 500 peut être raccordé au réseau électrique indifféremment par n'importe laquelle de ses extrémités libres, à travers la paroi supérieure 310 ou inférieure 311.

Chaque moyen de réception 331A, 331B comporte deux montants 332 orientés perpendiculairement aux parois avant 320 et arrière 340 de l'enveloppe isolante extérieure 300 présentant chacun un profil en L qui délimite avec la paroi latérale longitudinale 330 une rainure. Les rainures délimitées par les deux montants 332 de chaque moyen de réception 331A, 331B s'ouvrent en vis-à-vis (figures 6, 14 et 15).

Entre les deux montants 332, il est prévu une dent d'accrochage 333 sur laquelle l'élément de fixation 350 correspondant vient s'encliqueter.

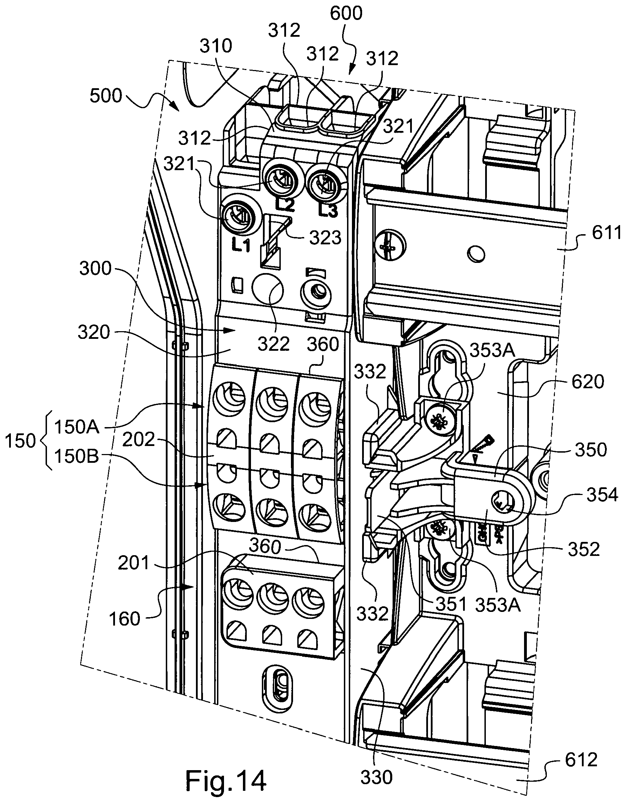

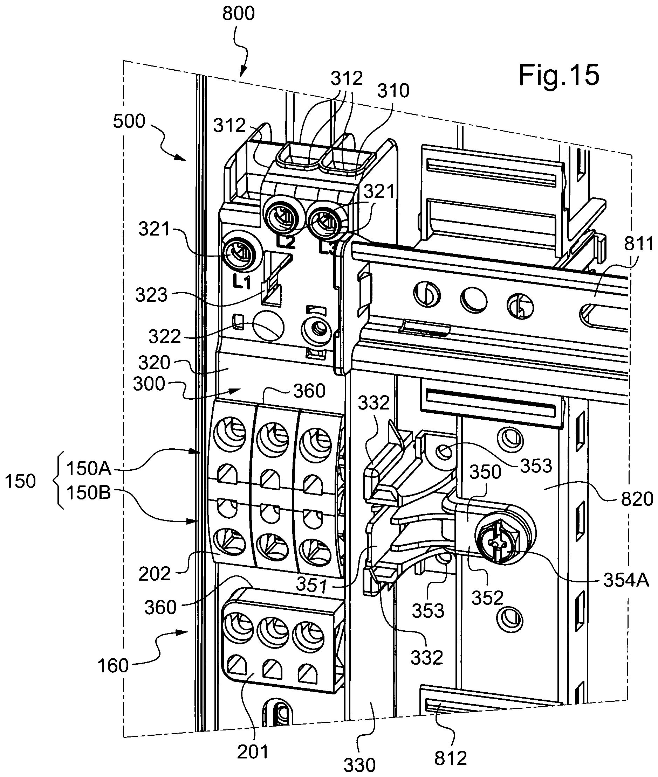

L'élément de fixation 350 est représenté plus particulièrement sur les figures 14 et 15.

Il comporte un support 351 dont les bords latéraux s'enfilent dans les rainures formées par les montants 332 de chaque moyen de réception à glissière 331A, 331B.

Ce support 351 s'étend parallèlement à la paroi latérale longitudinale 330 du dispositif 500 et comporte des moyens complémentaires d'encliquetage sur la dent d'accrochage 333.

Une languette 352 s'étend perpendiculairement à ce support 351 et comporte trois orifices d'accueil 353, 354 d'une vis de fixation pour permettre de fixer par vissage cette languette 352 dans le fond du coffret 600; 800 (figures 14 et 15).

Deux premiers orifices d'accueil 353 sont disposés selon un axe parallèle au support 351, à proximité de celui-ci.

Un troisième orifice d'accueil 354 est disposé à l'extrémité libre de ladite languette 352, plus loin du support 351 que les deux premiers orifices d'accueil 353. En outre, la languette 352 forme une marche entre les deux premiers orifices d'accueil 353 et le troisième orifice d'accueil 354, de sorte que celui-ci est situé dans un plan se trouvant légèrement en avant du plan dans lequel se trouvent les deux premiers orifices d'accueil 353.

Cette forme particulière de la languette 352 des moyens de fixation 350 permet de visser la languette 352 au fond de coffrets 600; 800 de différentes géométries, en utilisant soit les deux premiers orifices d'accueil 353 (figure 14), soit le troisième orifice d'accueil 354 (figure 15).

La languette 352 est fixée plus particulièrement aux montants 620, 820 (figures 14 et 15) prévus dans le fond du coffret 600; 800 sur lesquels les rails de montage des appareillages électriques sont fixés.

Dans une première géométrie du fond du coffret 600, représenté sur les figures 12, 13 et 14, les deux premiers orifices d'accueil 353 de la languette 352 viennent en regard d'une fente ouverte dans un montant 620 du coffret 600 et permettent le vissage de deux vis 353A dans cette fente. Cette fente s'étend parallèlement à l'axe longitudinale X du dispositif 500 de raccordement.

Dans une deuxième géométrie du fond du coffret 800, représenté sur la figure 15, le troisième orifice d'accueil 354 de la languette 352 vient en regard d'une ouverture d'un montant support des rails 811, 812 de ce coffret 800, et permet le vissage d'une vis 354A à travers cette ouverture et le troisième orifice d'accueil 354.

Comme le montrent les figures 6 et 8, l'enveloppe isolante extérieure 300 est en outre ici avantageusement formée d'une pluralité d'éléments modulaires 301, 302.

Dans l'exemple des figures 6 à 8, le dispositif 500 est destiné à alimenter deux rangées d'appareillages électriques. L'enveloppe isolante extérieure 300 est alors formée de deux éléments modulaires 301, 302 qui recouvrent chacun une moitié du dispositif 500.

Chacun de ces éléments modulaires 301, 302 comportent un élément modulaire avant 301A, 302A et un élément modulaire arrière 302A, 302B.

Les éléments modulaires avant 301A, 302A et arrière 301B, 302B forment respectivement les parties avant 300A et arrière 300B de l'enveloppe isolante extérieure 300 et présentent chacun respectivement les caractéristiques énoncées pour ces parties avant 300A et arrière 300B de l'enveloppe isolante extérieure 300 du dispositif 500.

Chaque élément avant 301A, 302A comporte une fenêtre 360 pour le passage d'un flasque isolant 201 recouvrant un sous-ensemble de connexion de neutre 160 et une fenêtre 360 pour le passage d'un flasque isolant 202 recouvrant une paire 150 de sous-ensemble de connexion de phase 150A, 150B.

Les éléments modulaires avant 301A, 302A et arrière 301B, 302B comportent chacun des moyens d'assemblage avec au moins un autre élément modulaire avant 301A, 302A ou arrière 301B, 302B pour former par assemblage les parties avant 300A et arrière 300B de l'enveloppe isolante extérieure 300.

Il peut s'agir de moyens d'emboîtement, d'encliquetage ou de vissage pour l'assemblage des deux éléments avant 301A, 302A ou de deux éléments arrière 301B, 302B.

L'enveloppe isolante extérieure 300 ne comportant que deux éléments modulaires 301, 302, les deux éléments avant 301A, 302A et arrière 301B, 302B sont ici des éléments adaptés à recouvrir l'une des extrémités de la rangée 100 de barres conductrices 110, 120, 130, 140 et présentent à cet effet les caractéristiques décrites précédemment.

Ils ne comportent des moyens d'assemblage avec un autre élément avant ou arrière qu'à une seule de leurs extrémités.

Si le dispositif 500 présente une plus grande longueur, on prévoit en plus des éléments modulaires d'extrémité similaires à ceux des figures 6 et 8, des éléments modulaires centraux qui viennent recouvrir une partie centrale du dispositif 500, c'est-à-dire une partie ne comportant pas une extrémité libre du dispositif 500.

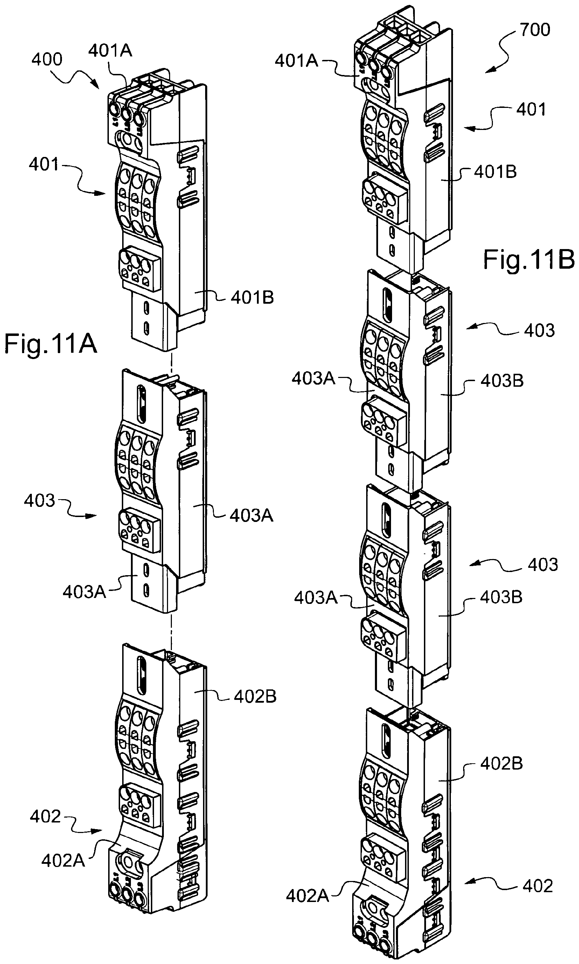

Des exemples de réalisation de deux enveloppes isolantes 400, 700 de plus grande longueur sont représentés sur les figures 11A et 11B.

Les éléments modulaires d'extrémité 401, 402 sont similaires aux éléments modulaires 301, 302 des figures 6 et 8. Ils sont formés d'éléments modulaires avant 401A, 402A et arrière 401B, 402B.

Un ou deux éléments modulaires centraux 403 viennent ici allonger l'enveloppe isolante extérieure 400, 700 (figures 11A et 11B). Ces éléments modulaires centraux 403 sont formés d'éléments modulaires avant 403A et arrière 403B.

Ces éléments modulaires avant 403A et arrière 403B sont adaptés à recouvrir une partie centrale du dispositif 500, et comportent à cet effet à leur deux extrémités libres des moyens d'assemblage avec un autre élément modulaire avant 403A ou arrière 403B central ou avec un élément avant 401A, 402A ou arrière 401B, 402B d'extrémité.

L'élément modulaire avant 403A comporte seulement les fenêtres 360 adaptées au passage des flasques isolants 201, 202 recouvrant un sous-ensemble de connexion de neutre 160 et une paire 150 de sous-ensembles de connexion de phase 150A, 150B.

Chaque élément modulaire central 403 présente une longueur standardisée déterminée en fonction de l'écart entre deux rangées d'appareillages électriques dans le coffret électrique, de manière à ce que chaque élément modulaire central 403 recouvre la partie du dispositif 500 de raccordement permettant le raccordement d'une rangée d'appareillages électriques.

La fabrication des dispositifs de raccordement selon l'invention pour l'alimentation de différents nombres de rangées d'appareillages électriques est alors simplifiée puisqu'il suffit d'assembler le nombre adéquat d'éléments d'enveloppe modulaire centraux avec les éléments d'enveloppe modulaire d'extrémités.

Il est ainsi seulement nécessaire de fabriquer trois types différents d'éléments modulaires pour réaliser toutes les longueurs possibles du dispositif 500 de raccordement : les deux éléments modulaires d'extrémité et l'élément modulaire central.

## Revendications

1. Dispositif (500) de raccordement électrique destiné à alimenter des rangées horizontales d'appareillages électriques (601, 602, 603) d'un coffret électrique (600; 800), comprenant une rangée (100) de barres conductrices (110, 120, 130, 140) verticales parallèles à un axe longitudinal (X) et présentant un plan moyen (P),
dans laquelle chaque barre conductrice est formée d'une plaquette (115, 125, 135, 145) métallique mince et allongée, présentant deux faces principales parallèles opposées, chaque face principale de chaque plaquette (115, 125, 135, 145) de chaque barre conductrice (110, 120, 130, 140) de la rangée étant disposée perpendiculairement au plan moyen (P) de cette rangée (100),
et dans laquelle deux barres conductrices latérales (110, 140) sont disposées aux extrémités de cette rangée (100), et comportent chacune au moins un connecteur électrique (111, 112, 121A, 121B, 131A, 131B, 132, 141A, 141B, 142) pour le raccordement électrique desdits appareillages électriques (601, 602, 603) à un réseau électrique, tous les connecteurs électriques (111, 112, 121A, 121B, 131A, 131B, 132, 141A, 141B, 142) des barres conductrices (110, 120, 130, 140) de ladite rangée (100) étant disposés dans un espace compris entre lesdites deux barres conductrices latérales (110, 140),
ledit dispositif de raccordement comportant au moins un sous-ensemble de connexion (150A, 150B, 160) qui comprend des connecteurs électriques intermédiaires (121A, 131A, 141A, 121B, 131B, 141B, 111),
chaque connecteur électrique intermédiaire (121A, 131A, 141A, 121B, 131B, 141B, 111) d'un sous-ensemble de connexion (150A, 150B, 160), étant rattaché à une barre conductrice (110, 120, 130, 140) par l'intermédiaire d'une patte (113, 123, 133, 143) qui est formée d'une seule pièce avec ladite plaquette (115, 125, 135, 145) de la barre conductrice (110, 120, 130, 140), et qui s'étend dans le prolongement des faces principales opposées de cette plaquette, vers l'avant dudit dispositif (500), à partir de la tranche (116, 126, 136, 146) de ladite plaquette (115, 125, 135, 145),
**caractérisé en ce que** ladite patte (113, 123, 133, 143) comporte au moins une aile latérale (114, 124, 134, 144) qui s'étend dans un plan perpendiculaire au plan moyen (P) de la rangée (100), à angle droit par rapport aux faces principales de ladite plaquette (115, 125, 135, 145), au-dessus de la tranche (116, 126, 136, 146) de ladite plaquette (115, 125, 135, 145), suivant une direction transversale (Y) perpendiculaire à l'axe longitudinal (X) dans le plan moyen (P) de la rangée (100), vers l'intérieur du dispositif (500), dans un espace compris entre les deux barre conductrices latérales (110, 140), chaque aile latérale (114, 124, 134, 144) supportant au moins un connecteur électrique intermédiaire de telle sorte que lesdits connecteurs électriques intermédiaires (121A, 131A, 141A, 121B, 131B, 141B, 111) d'un même sous-ensemble de connexion (150A, 150B, 160), sont alignés les uns à côtés des autres suivant ladite direction transversale (Y) dans ledit plan moyen (P) de la rangée (100).

2. Dispositif (500) de raccordement électrique selon la revendication 1, dans lequel chaque connecteur électrique (111, 112) d'au moins une (110) des barres conductrices (110, 120, 130, 140) est décalé suivant l'axe longitudinal (X) de ladite barre conductrice (110) par rapport aux connecteurs électriques (121A, 121B, 131A, 131B, 141A, 141B) de toutes les autres barres conductrices (120,130,140).

3. Dispositif (500) de raccordement électrique selon la revendication 2, dans lequel ledit sous-ensemble de connexion (150A, 150B) comprend un connecteur électrique (121A, 131A, 141A, 121B, 131B, 141B) de chaque barre conductrice (120, 130, 140) excepté de ladite barre conductrice (110) dont les connecteurs électriques (111, 112) sont décalés longitudinalement par rapport aux autres connecteurs électriques (121A, 131A, 141A, 121B, 131B, 141B).

4. Dispositif (500) de raccordement électrique selon la revendication 2, dans lequel ledit sous-ensemble de connexion (160) comprend des connecteurs électriques (111) de ladite barre conductrice (110) dont les connecteurs électriques (111) sont décalés longitudinalement par rapport aux autres connecteurs électriques (121A, 121B, 131A, 131B, 141A, 141B).

5. Dispositif (500) de raccordement électrique selon l'une des revendications 2 à 4, dans lequel ladite barre conductrice (110) dont les connecteurs électriques (111, 112) sont décalés longitudinalement par rapport aux autres connecteurs électriques (121A, 121B, 131A, 131B, 141A, 141B) est une barre conductrice latérale (110, 140) de ladite rangée (100) de barres conductrices (110, 120, 130, 140).

6. Dispositif (500) de raccordement électrique selon l'une des revendications 1 à 5, dans lequel chaque barre conductrice (110, 120, 130, 140) comporte :
- au moins un connecteur électrique d'extrémité (112, 122, 132, 142) situé à au moins l'une des extrémités libres de la barre conductrice (110, 120, 130, 140), et
- au moins un connecteur électrique intermédiaire (111, 121A, 121B, 131A, 131B, 141A, 141B), situé entre les deux extrémités libres de ladite barre conductrice (110, 120, 130, 140).

7. Dispositif (500) de raccordement électrique selon la revendication 6, dans lequel chaque connecteur électrique d'extrémités (112, 122, 132, 142) comporte une borne à vis, et chaque connecteur électrique intermédiaire (111, 121A, 121B, 131A, 131B, 141A, 141B) comporte une borne automatique à ressort.

8. Dispositif (500) de raccordement électrique selon l'une des revendications 6 à 7, dans lequel tous les connecteurs électriques intermédiaires (111, 121A, 121B, 131A, 131B, 141A, 141B) sont situés à une même distance par rapport à la barre conductrice (110, 120, 130, 140) correspondante.

9. Dispositif (500) de raccordement électrique selon l'une des revendications 6 à 8, dans lequel les connecteurs électriques d'extrémité (112, 122, 132, 142) de toutes les barres conductrices (110, 120, 130, 140), excepté celle (110) dont les connecteurs électriques (111, 112) sont décalés longitudinalement par rapport aux autres connecteurs électriques,(121A, 121B, 122, 131A, 131B, 132, 141A, 141B, 142) sont disposés en avant par rapport aux barres conductrices (110, 120, 130, 140).

10. Dispositif (500) selon l'une des revendications 6 à 9, dans lequel les connecteurs électriques d'extrémité (112) de ladite barre conductrice (110) dont les connecteurs électriques (111, 112) sont décalés longitudinalement par rapport aux autres connecteurs électriques (121A, 121B, 122, 131A, 131B, 132, 141A, 141B, 142), sont disposés en retrait par rapport aux connecteurs électriques d'extrémité (122, 132, 142) des autres barres conductrices (120, 130, 140).

11. Dispositif (500) selon l'une des revendications 6 à 10, dans lequel lesdits connecteurs électriques intermédiaires (111, 121A, 121B, 131A, 131B, 141A, 141B), situés entre les deux extrémités longitudinales de chaque barre conductrice (110, 120, 130, 140), sont entourés par des flasques isolants (201, 202) montés sur les barres conductrices.

12. Dispositif (500) selon la revendication 11, dans lequel il est prévu une enveloppe isolante extérieure (300) qui enferme lesdites barres conductrices (110, 120, 130, 140), cette enveloppe isolante extérieure (300) comportant des fenêtres (360) au travers desquelles émergent lesdits flasques isolants (201, 202).

13. Dispositif (500) selon la revendication 12, dans lequel ladite enveloppe isolante extérieure (300) comporte une pluralité d'éléments modulaires (301, 302; 401, 402, 403) qui comportent chacun des moyens de montage avec au moins un autre élément modulaire (301, 302; 401, 402, 403).

## Patentansprüche

1. Elektrisch leitende Verbindungsvorrichtung (500), die dazu bestimmt ist, horizontale Reihen elektrischer Geräte (601, 602, 603) eines elektrischen Schaltkastens (600; 800) zu versorgen, die eine Reihe (100) vertikaler, paralleler elektrisch leitender Stäbe (110, 120, 130, 140) mit Längsachse (X) aufweist und eine mittlere Ebene (P) definiert,
bei der jeder elektrisch leitende Stab von einer länglichen dünnen Metallplatte (115, 125, 135, 145) gebildet ist, die zwei parallele, einander entgegengesetzte Hauptseiten aufweist, wobei jede Hauptseite jeder Platte (115, 125, 135, 145) jedes elektrisch leitenden Stabs (110, 120, 130, 140) der Reihe senkrecht zur mittleren Ebene (P) dieser Reihe angeordnet ist,
und bei der zwei seitliche elektrisch leitende Stäbe (110, 140) an den Enden dieser Reihe angeordnet sind und jeweils wenigstens einen elektrischen Anschluß (111, 112, 121A, 121B, 131A, 131B, 141A, 141B, 142) zum elektrischen Verbinden dieser elektrischen Geräte (601, 602, 603) mit einem elektrischen Netz aufweisen, wobei alle elektrischen Anschlüsse (111, 112, 121A, 121B, 131A, 131B, 141A, 141B, 142) der elektrisch leitenden Stäbe (110, 120, 130, 140) der besagten Reihe (100) in einem Raum zwischen den beiden seitlichen elektrisch leitenden Stäben (110, 140) angeordnet sind,
wobei die Verbindungsvorrichtung wenigstens eine Verbindungsuntereinheit (150A, 150B, 160) aufweist, die elektrische Zwischenverbinder (121A, 131A, 141A, 121B, 131B, 141B, 111) aufweist,
wobei jeder elektrische Zwischenverbinder (121A, 131A, 141A, 121B, 131B, 141B, 111) einer Verbindungsuntereinheit (150A, 150B, 160) durch eine Lasche (113, 123, 133, 143), die mit der Platte (115, 125, 135, 145) des elektrisch leitenden Stabs (110, 120, 130, 140) einstückig gebildet ist und die sich von der Schmalseite (116, 126, 136, 146) der Platte (115, 125, 135, 145) aus in Verlängerung der einander entgegengesetzten Hauptseiten dieser Platte zur Vorderseite der Vorrichtung (500) hin erstreckt, an einem elektrisch leitenden Stab (110, 120, 130, 140) befestigt ist,
**dadurch gekennzeichnet, daß** die Lasche (113, 123, 133, 143) wenigstens einen seitlichen Flügel (114, 124, 134, 144) aufweist, der sich in einer zur mittleren Ebene (P) der Reihe (100) senkrechten Ebene, im rechten Winkel zu den Hauptseiten der Platte (115, 125, 135, 145), oberhalb der Schmalseite (116, 126, 136, 146) der Platte (115, 125, 135, 145), in einer zur Längsachse (X) in der mittleren Ebene (P) der Reihe (100) senkrechten Querrichtung (Y), zum Inneren der Vorrichtung (500) hin, in einem Raum zwischen den beiden seitlichen elektrisch leitenden Stäben (110, 140) erstreckt, wobei jeder seitliche Flügel (114, 124, 134, 144) wenigstens einen elektrischen Zwischenverbinder derart trägt, daß die elektrischen Zwischenverbinder (121A, 131A, 141A, 121B, 131B, 141B, 111) einer selben Verbindungsuntereinheit (150A, 150B, 160) nebeneinander in der Querrichtung (Y) in der mittleren Ebene (P) der Reihe (100) ausgerichtet sind.

2. Elektrisch leitende Verbindungsvorrichtung (500) gemäß Anspruch 1, bei der jeder elektrische Anschluß (111, 112) wenigstens eines der elektrisch leitenden Stäbe (110, 120, 130, 140) gegenüber den elektrischen Anschlüssen (121A, 121B, 131A, 131B, 141A, 141B) aller anderen elektrisch leitenden Stäbe (120, 130, 140) entlang der Längsachse (X) des elektrisch leitenden Stabs (110) versetzt ist.

3. Elektrisch leitende Verbindungsvorrichtung (500) gemäß Anspruch 2, bei der die Verbindungsuntereinheit (150A, 150B) einen elektrischen Verbinder (121A, 131A, 141A, 121B, 131B, 141B) jedes elektrisch leitenden Stabs (120, 130, 140) mit Ausnahme des elektrisch leitenden Stabs (110), dessen elektrische Verbinder (111, 112) gegenüber den anderen elektrischen Anschlüssen (121A, 121B, 131A, 131B, 141A, 141B) längs versetzt sind, aufweist.

4. Elektrisch leitende Verbindungsvorrichtung (500) gemäß Anspruch 2, bei der die Verbindungsuntereinheit (160) elektrische Verbinder (111) des elektrisch leitenden Stabs (110), dessen elektrische Verbinder (111) gegenüber den anderen elektrischen Anschlüssen (121A, 121B, 131A, 131B, 141A, 141B) längs versetzt sind, aufweist.

5. Elektrisch leitende Verbindungsvorrichtung (500) gemäß einem der Ansprüche 2 bis 4, bei der der elektrisch leitende Stab (110), dessen elektrische Verbinder (111, 112) gegenüber den anderen elektrischen Anschlüssen (121A, 121B, 131A, 131B, 141A, 141B) längs versetzt sind, ein seitlicher elektrisch leitender Stab (110, 140) der Reihe (100) von elektrisch leitenden Stäben (110, 120, 130, 140) ist.

6. Elektrisch leitende Verbindungsvorrichtung (500) gemäß einem der Ansprüche 1 bis 5, bei der jeder elektrisch leitende Stab (110, 120, 130, 140)
- wenigstens einen elektrischen Endverbinder (112, 122, 132, 142), der an wenigstens einem der freien Enden des elektrisch leitenden Stabs gelegen ist, und
- wenigstens einen zwischen den beiden freien Enden des elektrisch leitenden Stabs (110, 120, 130, 140) gelegenen elektrischen Zwischenverbinder (111, 121A, 121B, 131A, 131B, 141A, 141B) aufweist.

7. Elektrisch leitende Verbindungsvorrichtung (500) gemäß Anspruch 6, bei der jeder elektrische Endverbinder (112, 122, 132, 142) eine Schraubklemme aufweist und jeder elektrische Zwischenverbinder (111, 121A, 121B, 131A, 131B, 141A, 141B) eine automatische Federklemme aufweist.

8. Elektrisch leitende Verbindungsvorrichtung (500) gemäß einem der Ansprüche 6 bis 7, bei der alle elektrischen Zwischenverbinder (111, 121A, 121B, 131A, 131B, 141A, 141B) in einem gleichen Abstand zum entsprechenden elektrisch leitenden Stab (110, 120, 130, 140) gelegen sind.

9. Elektrisch leitende Verbindungsvorrichtung (500) gemäß einem der Ansprüche 6 bis 8, bei der die elektrischen Endverbinder (112, 122, 132, 142) aller elektrisch leitenden Stäbe (110, 120, 130, 140) mit Ausnahme dessen (110), dessen elektrische Verbinder (111, 112) gegenüber den anderen elektrischen Anschlüssen (121A, 121B, 122, 131A, 131B, 132, 141A, 141B, 142) längs versetzt sind, in Bezug auf die elektrisch leitenden Stäbe (110, 120, 130, 140) vor diesen angeordnet sind.

10. Elektrisch leitende Verbindungsvorrichtung (500) gemäß einem der Ansprüche 6 bis 9, bei der die elektrischen Endverbinder (112) des elektrisch leitenden Stabs (110), dessen elektrische Verbinder (111, 112) gegenüber den anderen elektrischen Anschlüssen (121A, 121B, 122, 131A, 131B, 132, 141A, 141B, 142) längs versetzt sind, in Bezug auf die elektrischen Endverbinder (122, 132, 142) der anderen elektrisch leitenden Stäbe (120, 130, 140) gegenüber diesen zurückgesetzt angeordnet sind.

11. Elektrisch leitende Verbindungsvorrichtung (500) gemäß einem der Ansprüche 6 bis 10, bei der die zwischen den beiden Längsenden jedes elektrisch leitenden Stabs (110, 120, 130, 140) gelegenen elektrischen Zwischenverbinder (111, 121A, 121B, 131A, 131B, 141A, 141B) mit auf den elektrisch leitenden Stäben befestigten isolierenden Flanschen (201, 202) umgeben sind.

12. Elektrisch leitende Verbindungsvorrichtung (500) gemäß Anspruch 11, bei der eine äußere isolierende Hülle (300) vorgesehen ist, die die elektrisch leitenden Stäbe (110, 120, 130, 140) umgibt, wobei die äußere isolierende Hülle (300) Fenster (360) aufweist, aus denen die isolierenden Flansche (201, 202) hervorragen.

13. Elektrisch leitende Verbindungsvorrichtung (500) gemäß Anspruch 12, bei der die äußere isolierende Hülle (300) eine Anzahl modularer Elemente (301, 302; 401, 402, 403) aufweist, von denen jedes Mittel zum Montieren mit einem anderen modularen Element (301, 302; 401, 402, 403) aufweist.

## Claims

1. Electrical connection device (500) that is intended to supply power to horizontal rows of electrical apparatuses (601, 602, 603) of an electrical panel (600; 800), comprising a row (100) of vertical conductive busbars (110, 120, 130, 140) that are parallel to a longitudinal axis (X) having a mean plane (P),
wherein each conductive busbar is formed from a thin and elongate metal plate (115, 125, 135, 145) having two opposite parallel main faces, each main face of each plate (115, 125, 135, 145) of each conductive busbar (110, 120, 130, 140) of the row being arranged perpendicularly to the mean plane (P) of this row (100),
and wherein two lateral conductive busbars (110, 140) are arranged at the ends of this row (100), and each include at least one electrical connector (111, 112, 121A, 121B, 131A, 131B, 132, 141A, 141B, 142) for electrically connecting said electrical apparatuses (601, 602, 603) to an electrical network, all of the electrical connectors (111, 112, 121A, 121B, 131A, 131B, 132, 141A, 141B, 142) of the conductive busbars (110, 120, 130, 140) of said row (100) being arranged in a space comprised between said two lateral conductive busbars (110, 140),
said connection device including at least one connection subassembly (150A, 150B, 160) that comprises intermediate electrical connectors (121A, 131A, 141A, 121B, 131B, 141B, 111),
each intermediate electrical connector (121A, 131A, 141A, 121B, 131B, 141B, 111) of a connection subassembly (150A, 150B, 160) being attached to a conductive busbar (110, 120, 130, 140) via a lug (113, 123, 133, 143) that is formed as one piece with said plate (115, 125, 135, 145) of the conductive busbar (110, 120, 130, 140), and which extends in continuation of the opposite main faces of this plate, towards the front of the device (500), from the section (116, 126, 136, 146) of said plate (115, 125, 135, 145),
**characterized in that** said lug (113, 123, 133, 143) includes at least one lateral wing (114, 124, 134, 144) that extends in a plane perpendicular to the mean plane (P) of the row (100), at right angles with respect to the main faces of said plate (115, 125, 135, 145), above the section (116, 126, 136, 146) of said plate (115, 125, 135, 145), along a transverse direction (Y) that is perpendicular to the longitudinal axis (X) in the mean plane (P) of the row (100), towards the interior of the device (500), in a space comprised between the two lateral conductive busbars (110, 140), each lateral wing (114, 124, 134, 144) bearing at least one intermediate electrical connector such that said intermediate electrical connectors (121A, 131A, 141A, 121B, 131B, 141B, 111) of one and the same connection subassembly (150A, 150B, 160) are aligned side by side along said transverse direction (Y) in said mean plane (P) of the row (100).

2. Electrical connection device (500) according to Claim 1, wherein each electrical conductor (111, 112) of at least one (110) of the conductive busbars (110, 120, 130, 140) is offset along the longitudinal axis (X) of said conductive busbar (110) with respect to the electrical conductors (121A, 121B, 131A, 131B, 141A, 141B) of all of the other conductive busbars (120, 130, 140).

3. Electrical connection device (500) according to Claim 2, wherein said connection subassembly (150A, 150B) comprises one electrical connector (121A, 131A, 141A, 121B, 131B, 141B) of each conductive busbar (120, 130, 140) with the exception of said conductive busbar (110), the electrical connectors (111, 112) of which are longitudinally offset with respect to the other electrical connectors (121A, 131A, 141A, 121B, 131B, 141B).

4. Electrical connection device (500) according to Claim 2, wherein said connection subassembly (160) comprises electrical connectors (111) of said conductive busbar (110), the electrical connectors (111) of which are longitudinally offset with respect to the other electrical connectors (121A, 121B, 131A, 131B, 141A, 141B).

5. Electrical connection device (500) according to one of Claims 2 to 4, wherein said conductive busbar (110), the electrical connectors (111, 112) of which are longitudinally offset with respect to the other electrical connectors (121A, 121B, 131A, 131B, 141A, 141B), is a lateral conductive busbars (110, 140) of said row (100) of conductive busbars (110, 120, 130, 140).

6. Electrical connection device (500) according to one of Claims 1 to 5, wherein each conductive busbar (110, 120, 130, 140) includes:
- at least one end electrical connector (112, 122, 132, 142) that is located at at least one of the free ends of the conductive busbar (110, 120, 130, 140), and
- at least one intermediate electrical connector (111, 121A, 121B, 131A, 131B, 141A, 141B) that is located between the two free ends of said conductive busbar (110, 120, 130, 140).

7. Electrical connection device (500) according to Claim 6, wherein each end electrical connector (112, 122, 132, 142) includes a screw terminal, and each intermediate electrical connector (111, 121A, 121B, 131A, 131B, 141A, 141B) includes an automatic spring terminal.

8. Electrical connection device (500) according to either of Claims 6 and 7, wherein all of the intermediate electrical connectors (111, 121A, 121B, 131A, 131B, 141A, 141B) are located one and the same distance away from the corresponding conductive busbar (110, 120, 130, 140).

9. Electrical connection device (500) according to one of Claims 6 to 8, wherein the end electrical conductors (112, 122, 132, 142) of all of the conductive busbars (110, 120, 130, 140), with the exception of the busbar (110) the electrical connectors (111, 112) of which are longitudinally offset with respect to the other electrical connectors (121A, 121B, 122, 131A, 131B, 132, 141A, 141B, 142), are set forward with respect to the conductive busbars (110, 120, 130, 140).

10. Device (500) according to one of Claims 6 to 9, wherein the end electrical connectors (112) of said conductive busbar (110), the electrical connectors (111, 112) of which are longitudinally offset with respect to the other electrical connectors (121A, 121B, 122, 131A, 131B, 132, 141A, 141B, 142), are set back with respect to the end electrical conductors (122, 132, 142) of the other conductive busbars (120, 130, 140).

11. Device (500) according to one of Claims 6 to 10, wherein said intermediate electrical connectors (111, 121A, 121B, 131A, 131B, 141A, 141B), located between the two longitudinal ends of each conductive busbar (110, 120, 130, 140), are surrounded by insulating shields (201, 202) that are mounted on the conductive busbars.

12. Device (500) according to Claim 11, wherein provision is made for an outer insulating casing (300) that encloses said conductive busbars (110, 120, 130, 140), this outer insulating casing (300) including windows (360) from which said insulating shields (201, 202) emerge.

13. Device (500) according to Claim 12, wherein said outer insulating casing (300) includes a plurality of modular elements (301, 302; 401, 402, 403), which each include means for attachment to at least one other modular element (301, 302; 401, 402, 403).
